# EUROPÄISCHE PATENTSCHRIFT

(11) **EP 4 410 235 B1**
(45) Veröffentlichungstag und Bekanntmachung des Hinweises auf die Patenterteilung: **04.02.2026**
(21) Anmeldenummer: 23155216.7
(22) Anmeldetag: 06.02.2023
(51) Int. Cl.: A61C 19/00, A61C 13/12

(54) **ABSAUGVORRICHTUNG**
SUCTION DEVICE
DISPOSITIF D'ASPIRATION

(43) Veröffentlichungstag der Anmeldung: 07.08.2024
(73) Patentinhaber: Zubler Gerätebau GmbH, 89081 Ulm (DE)
(72) Erfinder: EMMEL, Holger, 89129 Langenau (DE)
(74) Vertreter: Stolmár & Partner Patentanwälte PartG mbB

(56) Entgegenhaltungen:
- WO-A1-2021/243455
- DE-U1- 9 014 485

## Beschreibung

### Gebiet der Erfindung

Die Erfindung betrifft eine Absaugvorrichtung zum Absaugen von Staubpartikeln und einen Bearbeitungsbereich aufweisend eine solche Absaugvorrichtung.

### Stand der Technik

Absaugvorrichtungen insbesondere für Dentalkeramikarbeitsplätze sind aus dem Stand der Technik bekannt und werden insbesondere bei Schleifarbeiten eingesetzt, um luftgängige Keramikkleinpartikel abzusaugen. Bei der Bearbeitung von Dentalkeramik ist es zudem erforderlich, dass der Bearbeiter insbesondere vor dem Eintritt von Keramikpartikeln in dessen Atemwege und Augen geschützt wird. Vor allem bei hohen Rotationsgeschwindigkeiten der Schleif- bzw. Fräswerkzeuge kommt es dabei immer wieder zum kaum kontrollierbaren Abgang stark beschleunigter Keramikpartikel. Diese werden häufig in Richtung des Bearbeiters bewegt, der daher zumindest Augen- und Mundschutz zu tragen hat. Diese Schutzausrüstung schützt zum einen nur unzureichend und erschwert bzw. verschlechtert zum anderen die Arbeitsbedingungen, insbesondere das ungestörte Atmen und das freie Sichtfeld. Um weiteren Schutz zu bieten, können zusätzliche Schutzschilde eingesetzt werden bzw. die Absaugvorrichtung zu angeordnet werden, dass diese für den Bearbeiter als eine Art Abschirmung dient. Derart wird jedoch das Sichtfeld noch weiter beschränkt und das Bearbeitungsfeld abgedunkelt, wodurch außerdem die Produktqualität reduziert wird. Zur Ausleuchtung des Bearbeitungsbereiches können zusätzlich Leuchtmittel eingesetzt werden, wobei aufgrund des gleichzeitigen Bedarfs an Absaug- und Abschirmkomponenten eine gute Ausleuchtung erschwert wird sowie durch den Bearbeiter selbst und die vorgenannten Komponenten Schattenwurf erzeugt wird, der zu ungleichmäßiger Ausleuchtung des Bearbeitungsbereiches und zu einer Verschlechterung der Sichtverhältnisse führt.

Aus dem Stand der Technik bekannte Lösungen bieten dementsprechend einen schlechten Arbeitsschutz und/oder eingeschränkte Sichtverhältnisse und führen daher zu einer geringen Produktqualität. Zudem sind aus dem Stand der Technik bekannte Lösungen störanfällig.

So offenbart bspw. die DE 90 14 485 U1 *eine Absaughaube zum Absaugen von beim Bearbeiten von Werkstücken im Bereich der Handwerksberufe Zahntechnik, Juweliere, Graveure und artverwandter Berufe anfallendem Schleifstaub, bestehend aus einem deckelseitig und in Richtung zum Körper des Benutzers hin geschlossenen und deckelseitig mit einer Sichtscheibe und einer Lichtquelle versehenen Haubenteil, welches beidseitig sowie in vom Körper des Benutzers abgekehrter Richtung offen ist, und mit einem bodenseitig angeordneten, in einen darunter liegenden Absaugraum mündenden Fallrost, wobei die Absaughaube mit einem unter Federspannung stehenden, jede gewünschte Stellung beibehaltenden Kniehebelsystem verbunden ist und dass unterhalb des am Boden der Absaughaube angeordneten Fallrostes eine durch ein Staubfilter gegenüber dem Absaugstutzen abdeckbare Schublade als Speicherraum für Edelmetall-Schleifstaub angeordnet ist.*

Die WO 2021/243455 A1 offenbart *ein Beleuchtungssystem mit Unterdruckeinlass, das eine Beleuchtungsstruktur mit mindestens einem lichtemittierenden Element aufweist, das* so *dimensioniert ist, dass es einen Bereich beleuchtet, und eine Beleuchtungsstützstruktur, die sich an einem ersten Ende von der Beleuchtungsstruktur erstreckt und eine Neupositionierung der Beleuchtungsstruktur relativ zu einem zweiten Ende der Beleuchtungs-Trägerstruktur ermöglicht. Die Beleuchtungsstruktur weist eine Luftleitung auf, die sich entlang der Struktur erstreckt und in Richtung des zweiten Endes der Beleuchtungsstruktur mit einem Vakuumsystem verbindbar oder verbunden ist.*

### Darstellung der Erfindung

Aufgabe der vorliegenden Erfindung ist es daher, die aus dem Stand der Technik bekannten Probleme zu überwinden, d.h. eine robuste Lösung bereitzustellen, die einen guten Arbeitsschutz und gute Sichtverhältnisse ermöglicht sowie zu einer hohen Produktqualität führt.

Die Aufgabe wird gelöst durch eine Absaugvorrichtung nach Patentanspruch 1 und einen Bearbeitungsbereich nach Patentanspruch 13. Weitere die Erfindung ausgestaltende Merkmale sind in den abhängigen Patentansprüchen enthalten.

Eine erfindungsgemäße Absaugvorrichtung zum Absaugen von Staubpartikeln umfasst einen Hauptkörper mit einem Absaugtunnel aufweisend eine Absaugöffnung und eine Ableitöffnung, wobei die im Betrieb vor der Absaugöffnung auftretenden Staubpartikel aufnehmbar und durch den Absaugtunnel aus der Ableitöffnung ableitbar sind, eine Koppelungsvorrichtung zum Befestigen des Hauptkörpers an einem Bearbeitungsbereich, eine Lichtanordnung, zum Beleuchten des Bearbeitungsbereiches, wobei die Lichtanordnung einen Rahmen aufweist, entlang dessen zumindest ein Lichtelement angeordnet ist, das sich im Wesentlichen über den gesamten Rahmen erstreckt, wobei der Rahmen mittig eine Durchblicksöffnung umschließt, wobei das Lichtelement im Betrieb auf den Bearbeitungsbereich gerichtet ist und wobei die Lichtanordnung oben an dem Hauptkörper mittels einer Klemmmechanik befestigt ist, und eine elektrische Schaltung zum Aktivieren und Deaktivieren der Lichtanordnung, wobei der Rahmen oben einen Durchbruch aufweist, so dass der Rahmen (210) im Wesentlichen U-förmig oder hufeisenförmig ausgebildet ist. Der Durchbruch erstreckt sich insbesondere über die gesamte Breite der Absaugöffnung oder des Hauptkörpers .

Es kann ein längliches Lichtelement vorgesehen sein, dass an die Rahmengeometrie angepasst ist, d.h. bspw. geschwungen ausgeformt ist. Ein solches Lichtelement kann bspw. ein Leuchtstreifen sein. Es können aber auch mehrere Lichtelemente vorgesehen sein, die nebeneinander liegend der Rahmengeometrie folgen, bspw. mehrere nebeneinander insgesamt als Streifen ausgeformte LEDs.

Der die Durchblicksöffnung mittig umschließende Rahmen ist um die Durchblicksöffnung herum angeordnet.

Erfindungsgemäß bedeutet ein auf den Bearbeitungsbereich gerichtetes Lichtelement, dass dieses den Bearbeitungsbereich beleuchtet. Sind mehrere Lichtelemente vorgesehen, sind diese vorzugsweise alle auf den Bearbeitungsbereich gerichtet.

Erfindungsgemäß ist die Lichtanordnung im Bereich des Durchbruchs lichtelementfrei ausgebildet.

Erfindungsgemäß wird als Bearbeitungsbereich bspw. ein Arbeitstisch oder Arbeitsplatz in einem Dentallabor verstanden bzw. die Stelle an der bspw. die Dentalkeramik bearbeitet/gefräst wird.

Als oben liegend, angeordnet bzw. befindlich werden Teile bzw. Komponenten der Absaugvorrichtung bezeichnet, die im Betriebszustand in Bezug auf den Bearbeitungsbereich von diesem entfernt sind. Unten liegend, angeordnet bzw. befindlich bedeutet dementsprechend nahe des Bearbeitungsbereiches, vorne bedeutet im Betriebszustand in Bezug auf den Bearbeiter nahe dem Bearbeiter und hinten bedeutet im Betriebszustand von dem Bearbeiter entfernt.

Eine erfindungsgemäße Absaugvorrichtung bietet insbesondere den Vorteil, dass die Lichtanordnung unmittelbar und sicher in der Nähe der Absaugöffnung anordenbar ist, wodurch gegenüber bekannten Lösungen die Sichtverhältnisse im Bearbeitungsbereich verbessert werden können.

Der Durchbruch ist vorzugsweise zumindest 7 cm, besonders vorzugsweise zumindest 10 cm und noch weiter bevorzugt zumindest 15 cm breit. Derart können die Sichtverhältnisse verbessert werden.

Die Aufgabe wird ferner gelöst durch eine Lichtanordnung für eine Absaugvorrichtung, zum Beleuchten eines Bearbeitungsbereiches, wobei die Lichtanordnung einen Rahmen aufweist, entlang dessen zumindest ein Lichtelement angeordnet ist, das sich im Wesentlichen über den gesamten Rahmen erstreckt, wobei der Rahmen mittig eine Durchblicksöffnung umschließt, wobei das Lichtelement im Betrieb auf den Bearbeitungsbereich gerichtet ist, und eine elektrische Schaltung zum Aktivieren und Deaktivieren der Lichtanordnung, wobei der Rahmen oben einen Durchbruch aufweist, der sich insbesondere über die gesamte Breite einer Absaugöffnung der Absaugvorrichtung oder eines Hauptkörpers der Absaugvorrichtung erstreckt. Es ist möglich, eine solche Lichtanordnung auch direkt an einem Dentalwerkzeug zu befestigen, bspw. an einem Bohrwerkzeug, wodurch Schattenbildung durch das Werkzeug selbst minimiert werden kann.

Vorzugsweise ist die, die der Erfindung zugrundeliegende Aufgabe lösende Lichtanordnung an einer Absaugvorrichtung befestigbar oder weist diese ferner ein Standelement auf, mittels dessen die Lichtanordnung auf einem Bearbeitungsbereich positionierbar ist.

Die im Folgenden dargestellten, die erfindungsgemäße Absaugvorrichtung ausgestaltenden Merkmale sind in gleicher Weise auf die, die der Erfindung zugrundeliegende Aufgabe lösende Lichtanordnung übertragbar.

Vorzugsweise weist die Absaugvorrichtung ferner eine transparente Schutzabdeckung auf, die vor dem Lichtelement angeordnet ist. Derart kann das Lichtelement vor Beschädigung durch Keramikstaub geschützt werden, wodurch die Robustheit der Absaugvorrichtung gesteigert werden kann.

Vorzugsweise ist der obere Bereich der Durchblicksöffnung zudem rahmenfrei oder transparent ausgebildet. Derart kann das Sichtfeld vergrößert bzw. verbessert werden.

Vorzugsweise erstreckt sich das Lichtelement über einen unteren Bereich des Rahmens. Derart kann die Sichtbarkeit im Bearbeitungsbereich verbessert werden, wodurch die Produktqualität gesteigert werden kann.

Vorzugsweise umfasst die Absaugvorrichtung ferner eine transparente Schutzplatte, die vor der Durchblicksöffnung und insbesondere lösbar an der Absaugvorrichtung befestigt ist. Auch die transparente Schutzplatte ist im oberen Bereich lichtelementfrei ausgebildet. Derart kann die Arbeitssicherheit gesteigert werden, ohne dass die Sichtverhältnisse im Bearbeitungsbereich beeinträchtigt werden.

Vorzugsweise ist der Rahmen an der transparenten Schutzplatte befestigt. Derart kann ein minimaler Bauraum ermöglicht werden, wodurch trotz zusätzlicher Schutzelemente die Sichtverhältnisse im Bearbeitungsbereich nicht beeinträchtigt werden.

Vorzugsweise ist der Rahmen mittels der transparenten Schutzplatte an dem Hauptkörper befestigt, insbesondere über eine Klemmmechanik. Alternativ kann die transparente Schutzplatte mittels des Rahmens an dem Hauptkörper befestigt sein. Weiter alternativ können der Rahmen und die transparente Scheibe eigenständig an dem Hauptkörper befestigt sein, wobei vorzugsweise für beide eine gemeinsame Befestigungsvorrichtung vorgesehen ist. Mit den drei vorgenannten bevorzugten Ausgestaltungen kann es ermöglicht werden, dass der Rahmen mit der transparenten Schutzplatte auf einfache Weise von dem Hauptkörper entfernbar ist, wodurch eine schnelle und sichere Reinigbarkeit ermöglicht wird.

Da der Rahmen im Wesentlichen U-förmig oder hufeisenförmig ausgebildet ist, können die Sichtverhältnisse in dem Bearbeitungsbereich verbessert werden.

Vorzugsweise weist der Rahmen zwei seitliche Schenkel auf, die weiter vorzugsweise gekrümmt sind und besonders bevorzugt nach innen gekrümmt sind. Derart kann der sichtbare Bereich des Bearbeitungsbereichs vergrößert werden, wodurch die en die Sichtverhältnisse in dem Bearbeitungsbereich verbessert werden können.

Vorzugsweise sind die entlang des Rahmens angeordneten Teile des Lichtelementes zueinander geneigt. Sind mehrere Lichtelemente vorgesehen, sind diese vorzugsweise zueinander geneigt angeordnet. Zueinander geneigt bedeutet dabei, dass die Teile des Lichtelementes bzw. die Lichtelemente im Wesentlichen auf einen gemeinsamen Punkt bzw. einen gemeinsamen mittig gelegenen Bereich des Bearbeitungsbereiches gerichtet sind.

Derart können die Lichtverhältnisse in dem Bearbeitungsbereich verbessert werden, wodurch gleichzeitig die Sichtverhältnisse in dem Bearbeitungsbereich verbessert werden können.

Vorzugsweise weisen alle Teile des Lichtelementes bzw. alle Lichtelemente die gleiche Neigung auf. Derart kann die Gleichmäßigkeit der Ausleuchtung in dem Bearbeitungsbereich erhöht werden, wodurch gleichzeitig die Sichtverhältnisse in dem Bearbeitungsbereich verbessert werden können.

Vorzugsweise ist die Ableitöffnung als Koppelungsvorrichtung ausgebildet. Derart kann eine platzsparende und kostengünstige Lösung bereitgestellt werden.

Vorzugsweise umfasst die Absaugvorrichtung ferner einen elektrischen Anschluss zum elektrischen Verbinden der Absaugvorrichtung mit dem Bearbeitungsbereich. Als ein elektrischer Anschluss ist ein Anschluss zu verstehen, mit der die Absaugvorrichtung mit einer elektrischen Stromquelle verbindbar ist, sodass die Lichtanordnung mit elektrischem Strom versorgbar ist. Derart kann es ermöglicht werden, dass keine Stromversorgung bzw. kein Stromspeicher in unmittelbarer Nähe der Lichtanordnung vorzusehen ist, wodurch der notwendige Bauraum reduziert werden kann, dadurch können die Sichtverhältnisse verbessert werden.

Vorzugsweise ist der elektrische Anschluss an der Koppelungsvorrichtung angeordnet und kabellos ausgebildet. Derart kann es ermöglicht werden, dass zur Versorgung der Lichtanordnung mit elektrischem Strom keine außenliegenden Stromleitkabel vorzusehen sind, die insbesondere in der staubbelasteten Arbeitsumgebung stör- bzw. kurzschlussanfällig sind. Derart kann die Arbeitssicherheit und Robustheit der Absaugvorrichtung verbessert werden.

Vorzugsweise verläuft eine elektrische Leitung von dem elektrischen Anschluss zu dem Lichtelement durch den Absaugtunnel. Auch auf diese Weise kann es ermöglicht werden, dass zur Versorgung der Lichtanordnung mit elektrischem Strom keine außenliegenden Stromleitkabel vorzusehen sind.

Vorzugsweise verläuft die elektrische Leitung von dem elektrischen Anschluss zu den Lichtelementen in einem Kabelschacht. Derart kann die elektrische Leitung in dem Absaugtunnel vor sich schnell bewegenden Keramikpartikeln geschützt werden, wodurch die Robustheit der Absaugvorrichtung erhöht werden kann.

Vorzugsweise ist die Absaugöffnung als Absaugtrichter ausgeformt. Derart kann die Absaugwirkung erhöht werden, wodurch die Effizienz der Absaugvorrichtung erhöht werden kann.

Vorzugsweise ist der Hauptkörper um im Wesentlichen 180° nach vorne gekrümmt. Derart kann der Hauptkörper selbst als zusätzlich abschirmende Komponente eingesetzt werden, wodurch die Schutzwirkung der Absaugvorrichtung erhöht werden kann.

Vorzugsweise ist die Absaugöffnung mit einem Gitter abgedeckt. Derart kann verhindert werden, dass unbeabsichtigt größere Gegenstände, bspw. Werkzeugteile oder aber auch Dentalkeramikteile in den Absaugtunnel gelangen und diesen verstopfen. Derart kann die Robustheit der Absaugvorrichtung verbessert werden.

Vorzugsweise weist die Absaugvorrichtung im Bereich der Durchblicksöffnung ferner ein insbesondere rahmenloses bzw. einen transparenten Rahmen aufweisendes Lupenelement auf. Derart können die Sichtverhältnisse im Bearbeitungsbereich noch weiter verbessert werden.

Ein erfindungsgemäßer Bearbeitungsbereich umfassend einen Arbeitstisch ist mit einer wie vorstehend beschriebenen Absaugvorrichtung koppelbar.

### Kurze Beschreibung der Figuren

Fig. 1a zeigt eine Absaugvorrichtung in einer isometrischen Ansicht von vorne.
Fig. 1b zeigt die in Fig. 1a dargestellte Absaugvorrichtung in einer isometrischen Ansicht von hinten.
Fig. 1c zeigt die in den Fig. 1a und 1b dargestellte Absaugvorrichtung in einer Aufsicht.
Fig. 1d zeigt die in den Fig. 1a bis 1c dargestellte Absaugvorrichtung in einer Seitenansicht.
Fig. 1e zeigt die in den Fig. 1a bis 1d dargestellte Absaugvorrichtung gekoppelt mit einem Arbeitsbereich in einer Aufsicht.
Fig. 1f zeigt die in Fig. 1e dargestellte Absaugvorrichtung in einer Seitenansicht.
Fig. 2 zeigt die in den Fig. 1a bis 1d dargestellte Absaugvorrichtung in einer seitlichen Schnittansicht.
Fig. 3a zeigt eine Lichtanordnung in einer isometrischen Ansicht von vorne.
Fig. 3b zeigt die in Fig. 3a dargestellte Lichtanordnung in einer isometrischen Ansicht von hinten.
Fig. 4a zeigt einen Hauptkörper in einer isometrischen Ansicht.
Fig. 4b zeigt den in Fig. 4a dargestellten Hauptkörper in einer Vorderansicht.
Fig. 4c zeigt den in den Fig. 4a und 4b dargestellten Hauptkörper in einer Rückansicht.
Fig. 4d zeigt den in Fig. 4a bis 4c dargestellten Hauptkörper in einer seitlichen Schnittansicht.
Fig. 5a zeigt ein Schaltergehäuse in einer Vorderansicht.
Fig. 5b zeigt das in Fig. 5a dargestellte Schaltergehäuse in einer seitlichen Schnittansicht.
Fig. 6a zeigt einen Absaugtrichter in einer Ansicht von hinten.
Fig. 6b zeigt den in Fig. 6a dargestellten Absaugtrichter in einer seitlichen Schnittansicht.
Fig. 6c zeigt den in den Fig. 6a und 6b dargestellten Absaugtrichter in einer Ansicht von oben.
Fig. 6d zeigt den in den Fig. 6a bis 6c dargestellten Absaugtrichter in einer Ansicht von unten.
Fig. 7a zeigt eine Absaugvorrichtung mit einer transparenten Schutzplatte in einer isometrischen Ansicht von vorne.
Fig. 7b zeigt die in Fig. 7a dargestellte Absaugvorrichtung in einer isometrischen Ansicht von hinten.

### Beschreibung der bevorzugten Ausführungsformen

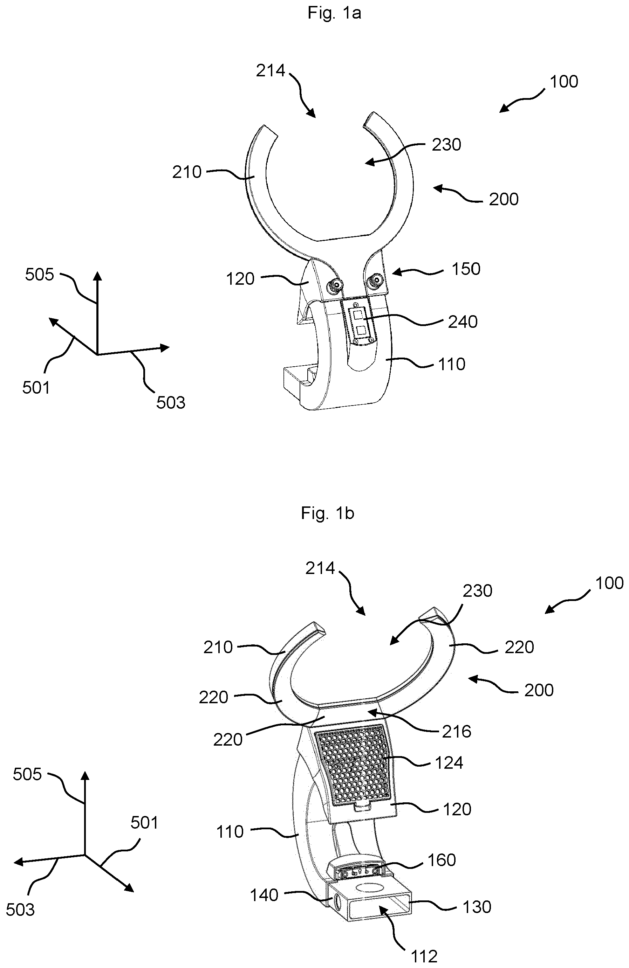

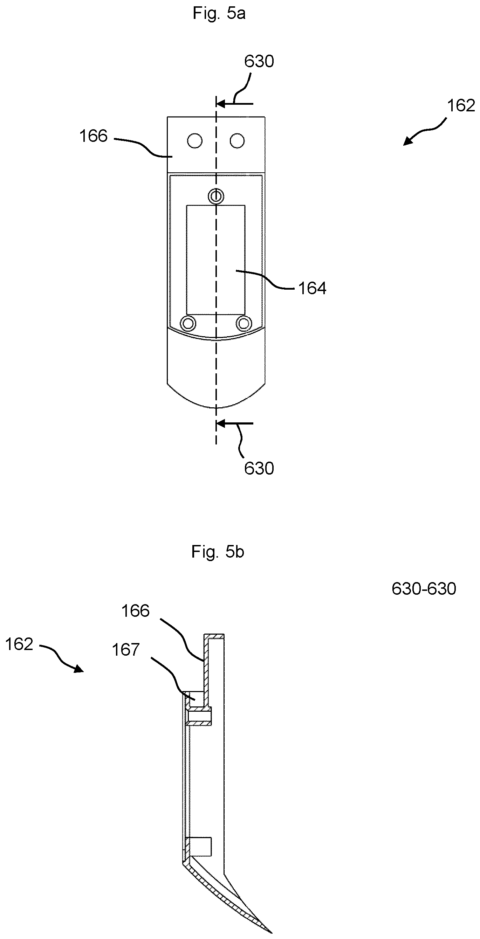

Fig. 1a zeigt eine Absaugvorrichtung 100 in einer isometrischen Ansicht von vorne. Die Absaugvorrichtung 100 ist entlang einer sich von vorne nach hinten erstreckenden Längsrichtung 501, einer sich von links nach rechts erstreckenden Breitenrichtung 503 und einer sich von unten nach oben erstreckenden Höhenrichtung 505 ausgerichtet. Die Absaugvorrichtung 100 weist einen Hauptkörper 110 auf, an dem oben mittels einer Klemmmechanik 150 eine Lichtanordnung 200 befestigt ist. Die Lichtanordnung 200 weist einen Rahmen 210 auf, der U-förmig bzw. hufeisenförmig um eine Durchblicksöffnung 230 herum ausgeformt ist. Unterhalb der Klemmmechanik 150 weist die Absaugvorrichtung 100 eine elektrische Schaltung 240 auf. Die elektrische Schaltung 240 kann bspw. in ein Schaltergehäuse aufgenommen und über diesen an dem Hauptkörper 110 befestigt sein (vgl. Fig. 5a und 5b). Die Absaugvorrichtung 100 weist ferner einen Absaugtrichter 120 auf, der ebenfalls oben mit dem Hauptkörper 110 verbunden ist. Der Absaugtrichter 120 ist hinter der Klemmmechanik 150 angeordnet und mittels dieser zusätzlich an dem Hauptkörper 110 befestigt. Der Rahmen 210 weist oben einen Durchbruch 214 auf, der in etwa die Breite des Absaugtrichters 120 aufweist.

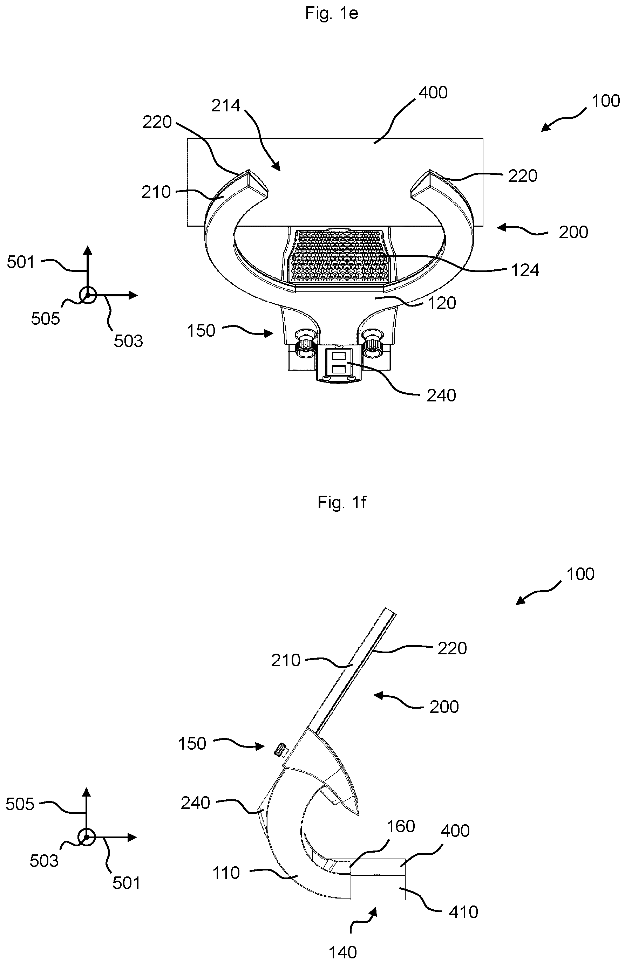

Fig. 1b zeigt die in Fig. 1a dargestellte Absaugvorrichtung 100 in einer isometrischen Ansicht von hinten. Die Lichtanordnung 200 weist ferner drei Lichtelemente 220 auf, die hinter dem Rahmen 210 angeordnet sind und diesen auf dessen Rückseite vollständig bedecken. Die drei Lichtelemente 210 sind in Richtung der Durchblicksöffnung 230 geneigt ausgebildet, wobei die Neigung vorzugsweise derart gewählt ist, dass sich unten ein gleichmäßig ausgeprägter Lichtbereich ausbildet, insbesondere auf einem Bearbeitungsbereich 400 (vgl. Fig. 1e und 1f). Das mittig bzw. unten angeordnete Lichtelement 220 ist in einem unteren Bereich 216 des Rahmens 210 mit diesem verbunden. Die Absaugvorrichtung 100 weist ferner einen Absaugtunnel 112 auf, der von einer Ableitöffnung 130 durch den Hauptkörper 110 bis zu dem Absaugtrichter 120 verläuft. Die Absaugvorrichtung 100 weist ferner eine Koppelungsvorrichtung 140 auf, die am unteren Ende des Hauptkörpers 110 mit diesem verbunden ist. Die Absaugvorrichtung 100 weist ferner einen elektrischen Anschluss 160 auf, der am vorderen, oberen Ende der Koppelungsvorrichtung 140 mit dem Hauptkörper 110 verbunden ist. Die Absaugvorrichtung 100 weist ferner ein Gitter 124 auf, dass hinter dem Absaugtrichter 120 angeordnet ist und diesen abdeckt.

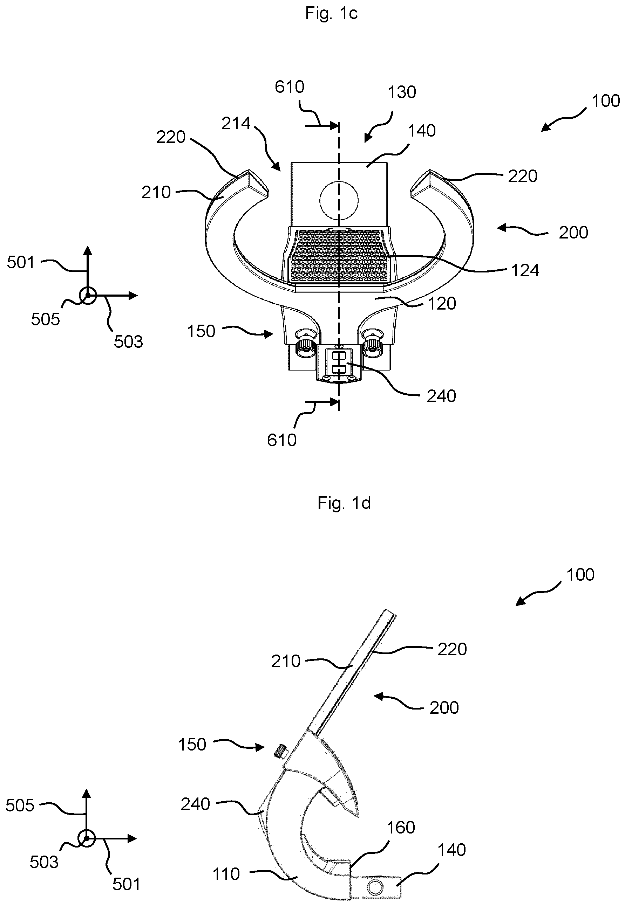

Fig. 1c zeigt die in den Fig. 1a und 1b dargestellte Absaugvorrichtung 100 in einer Aufsicht. Fig. 1d zeigt die in den Fig. 1a bis 1c dargestellte Absaugvorrichtung 100 in einer Seitenansicht.

Fig. 1e zeigt die in den Fig. 1a bis 1d dargestellte Absaugvorrichtung 100 gekoppelt mit einem Arbeitsbereich 400 in einer Aufsicht. Fig. 1f zeigt die in Fig. 1e dargestellte Absaugvorrichtung 100 in einer Seitenansicht. Der Arbeitsbereich 400 weist eine Koppelungsaufnahme 410 auf, die unten an dem Arbeitsbereich 400 angeordnet ist und mittels derer der Arbeitsbereich 400 an der Koppelungsvorrichtung 140 mit der Absaugvorrichtung 100 gekoppelt bzw. verbunden ist. Der Bearbeitungsbereich 400 ist zudem über den elektrischen Anschluss 160 elektrisch mit der Absaugvorrichtung 100 verbunden.

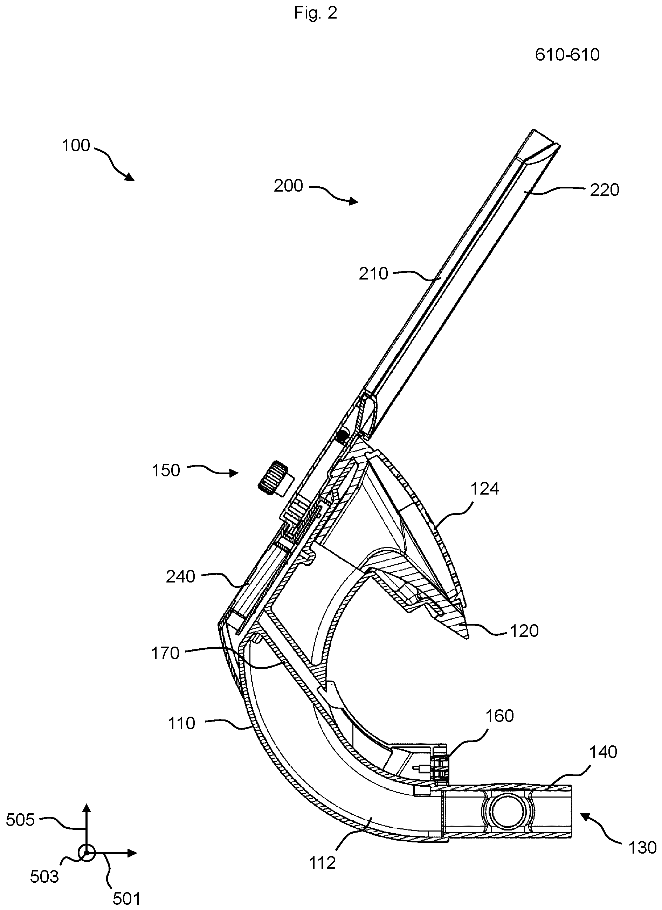

Fig. 2 zeigt die in den Fig. 1a bis 1d dargestellte Absaugvorrichtung 100 in einer seitlichen Schnittansicht 610-610. Die Schnittansicht 610-610 entspricht dabei der in Fig. 1c mit den Bezugszeichen 610 gekennzeichneten Schnittlinie. Der Hauptkörper 110 weist ferner einen Kabelschacht 170 auf, der durch den Absaugtunnel 112 verläuft und über den der elektrische Anschluss 160 mit der elektrischen Schaltung 240 und damit mit den Lichtelementen 210 elektrisch verbunden ist.

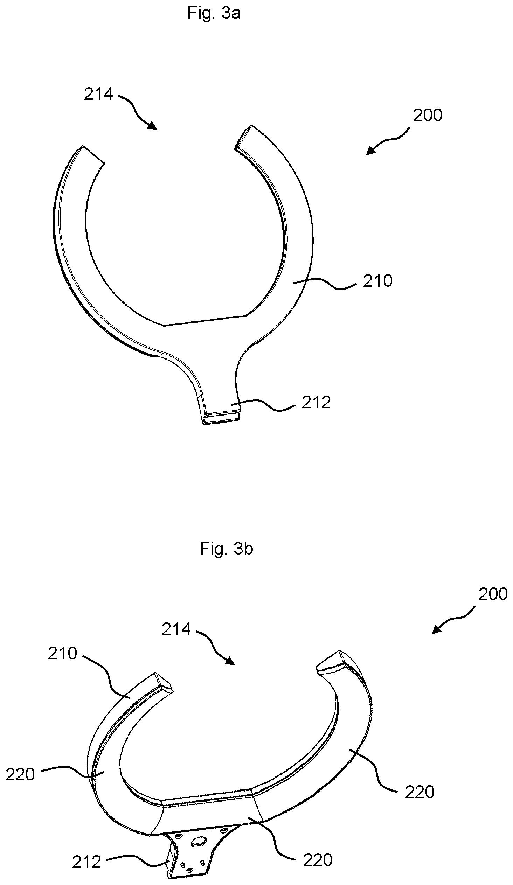

Fig. 3a zeigt eine Lichtanordnung 200 in einer isometrischen Ansicht von vorne. Fig. 3b zeigt die in Fig. 3a dargestellte Lichtanordnung 200 in einer isometrischen Ansicht von hinten. Die in den Fig. 3a und 3b dargestellte Lichtanordnung 200 entspricht dabei der in den Fig. 1a bis 2 als Teil der Absaugvorrichtung 100 dargestellten Lichtanordnung 200. Die Lichtanordnung 200 weist ferner eine Verbindungsvorrichtung 212 auf, mittels der die Lichtanordnung 200 an dem Hauptkörper 110 befestigt ist.

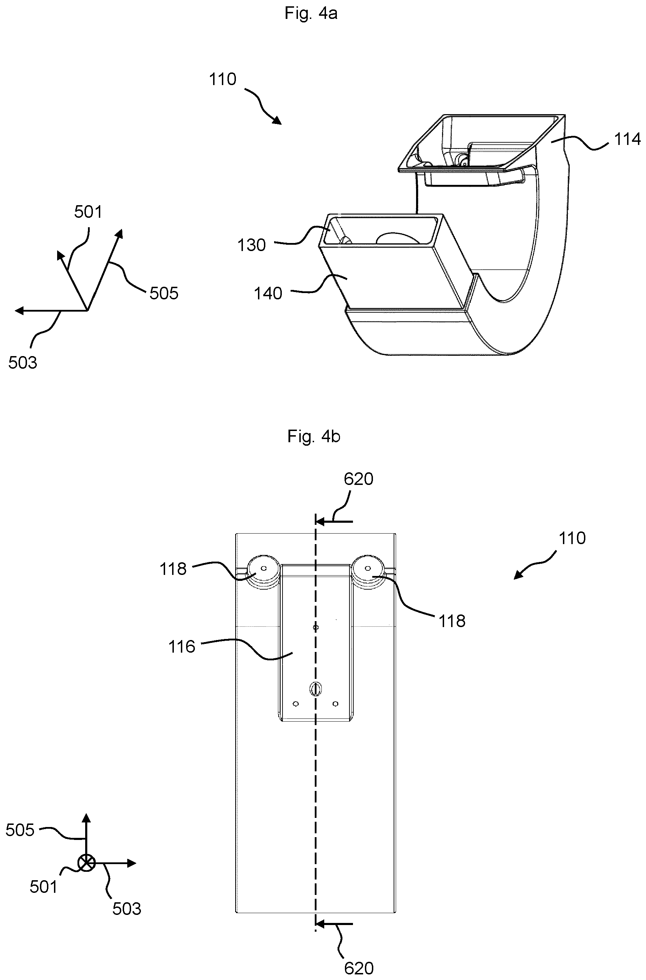

Fig. 4a zeigt einen Hauptkörper 110 in einer isometrischen Ansicht. Die in Fig. 4a dargestellte Lichtanordnung 200 entspricht dabei dem in den Fig. 1a bis 2 als Teil der Absaugvorrichtung 100 dargestellten Hauptkörper 110. Der Hauptkörper 110 weist im oberen Bereich eine Absaugtrichteraufnahme 114 auf, mittels derer der Absaugtrichter 120 mit dem Hauptkörper 110 verbindbar ist. Der Hauptkörper 110 ist im Wesentlichen um 180° nach vorne gekrümmt, d.h. die Öffnungsrichtung der Absaugtrichteraufnahme 114 verläuft im Wesentlichen parallel zu der Öffnungsrichtung der Ableitöffnung 130.

Fig. 4b zeigt den in Fig. 4a dargestellten Hauptkörper 110 in einer Vorderansicht. Der Hauptkörper 110 weist im oberen Bereich zwei Klemmaufnahmen 118 auf. Der Hauptkörper 110 weist ferner eine Anschlussaufnahme 116, in die die elektrische Schaltung 240 aufnehmbar ist.

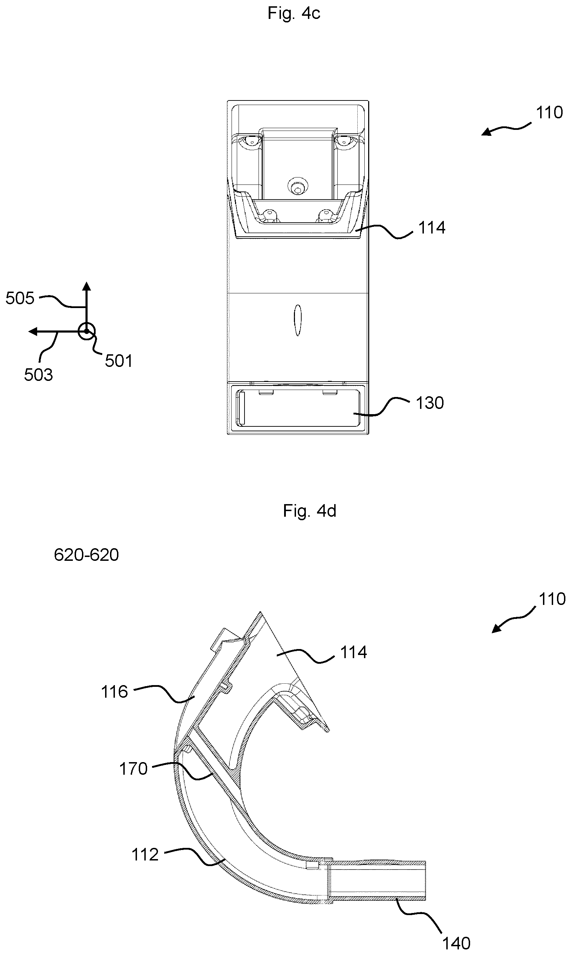

Fig. 4c zeigt den in den Fig. 4a und 4b dargestellten Hauptkörper 110 in einer Rückansicht. Fig. 4d zeigt den in Fig. 4a bis 4c dargestellten Hauptkörper 110 in einer seitlichen Schnittansicht 620-620. Die Schnittansicht 620-620 entspricht dabei der in Fig. 4b mit den Bezugszeichen 620 gekennzeichneten Schnittlinie.

Fig. 5a zeigt ein Schaltergehäuse 162 in einer Vorderansicht. Das Schaltergehäuse 162 weist eine Schalteraufnahme 164 auf, in die eine wie in Fig. 1a dargestellte elektrische Schaltung 240 aufnehmbar und für einen Bediener zugänglich ist. Das Schaltergehäuse 162 ist ferner in die Anschlussaufnahme 116 aufnehmbar bzw. an dieser mit dem Hauptkörper 110 befestigbar.

Fig. 5b zeigt das in Fig. 5a dargestellte Schaltergehäuse 162 in einer seitlichen Schnittansicht 630-630. Die Schnittansicht 630-630 entspricht dabei der in Fig. 5a mit den Bezugszeichen 630 gekennzeichneten Schnittlinie. Das Schaltergehäuse 162 weist ferner eine Rahmenaufnahme 166 auf, in die der Rahmen 210 zumindest teilweise aufnehmbar ist. Die Rahmenaufnahme 166 weist eine Nut 167 auf, in die der Rahmen 210, insbesondere dessen Verbindungsvorrichtung 212 zumindest teilweise aufnehmbar bzw. versenkbar ist (vgl. Fig. 3a und 3b).

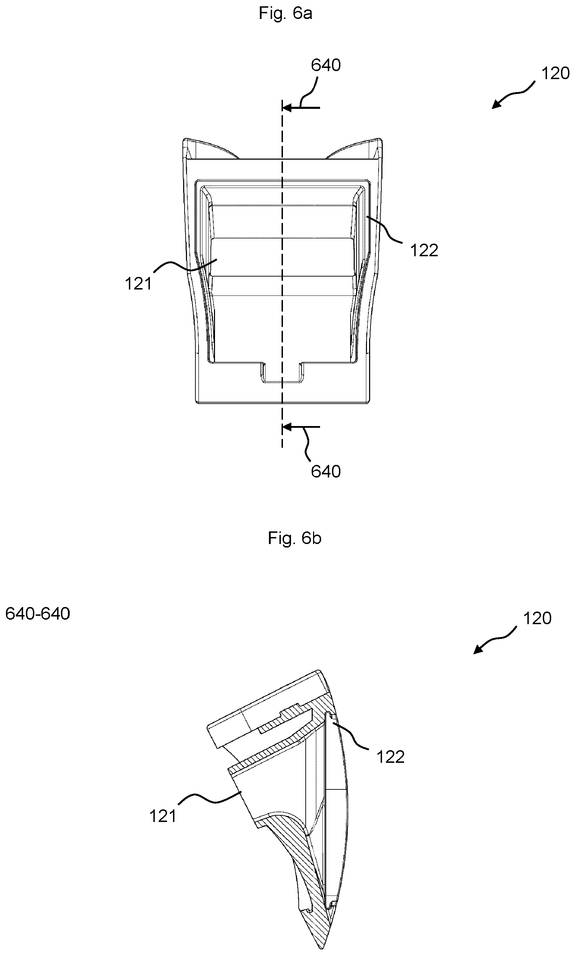

Fig. 6a zeigt einen Absaugtrichter 120 in einer Ansicht von hinten. Der in Fig. 6a dargestellte Absaugtrichter 120 entspricht dabei dem in den Fig. 1a bis 2 als Teil der Absaugvorrichtung 100 dargestellten Absaugtrichter 120. Der Absaugtrichter 120 weist eine Tunnelöffnung 121 auf, die im Betriebszustand bzw. montierten Zustand in den Absaugtunnel 112 hineinragt. Der Absaugtrichter 120 ist in Fig. 6a ohne das Gitter 124 dargestellt. Der Absaugtrichter 120 weist ferner eine Gitteraufnahme 122 auf, in die das Gitter aufnehmbar ist (vgl. Fig. 1b).

Fig. 6b zeigt den in Fig. 6a dargestellten Absaugtrichter 120 in einer seitlichen Schnittansicht 640-640. Die Schnittansicht 640-640 entspricht dabei der in Fig. 6a mit den Bezugszeichen 640 gekennzeichneten Schnittlinie. Der Absaugtrichter 120 weist eine von der Gitteraufnahme 122 zu der Tunnelöffnung 121 sich verjüngende bzw. trichterförmige Öffnung auf.

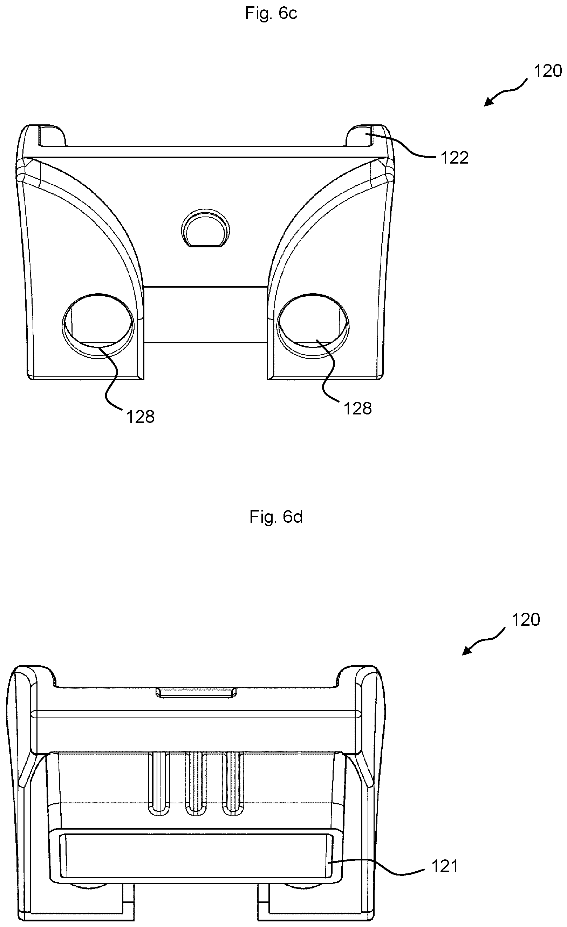

Fig. 6c zeigt den in den Fig. 6a und 6b dargestellten Absaugtrichter 120 in einer Ansicht von oben. Fig. 6d zeigt den in den Fig. 6a bis 6c dargestellten Absaugtrichter 120 in einer Ansicht von unten. Der Absaugtrichter 120 weist ferner zwei Klemmöffnungen 128 auf, die mit den beiden Klemmaufnahmen 118 koppelbar sind. Mittels der beiden Klemmöffnungen 128 und den beiden Klemmaufnahmen 118 ist der Absaugtrichter 120 an dem Hauptkörper 110 befestigbar (vgl. Fig. 4b). Es kann für diesen Zweck auch eine andere Anzahl an Klemmaufnahmen 118 und Klemmöffnungen 128 vorgesehen sein, bspw. eine oder drei, vier oder mehr als vier.

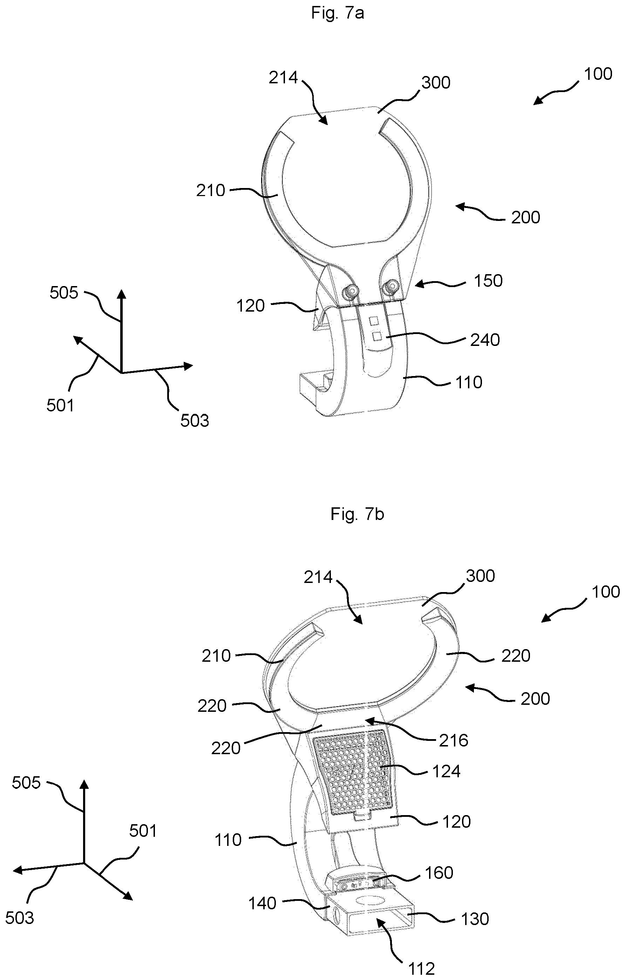

Fig. 7a zeigt eine Absaugvorrichtung 100 mit einer transparenten Schutzplatte 300 in einer isometrischen Ansicht von vorne. Fig. 7b zeigt die in Fig. 7a dargestellte Absaugvorrichtung 100 in einer isometrischen Ansicht von hinten. Die transparente Schutzplatte 300 ist mittels der Klemmmechanik 150 derart mit bzw. an dem Rahmen 210 befestigt, dass die Durchblicksöffnung 230 verdeckt ist (vgl. Fig. 1a). Da die transparente Schutzplatte 300 transparent ist, wird zwar ein Durchtritt von Staub durch die Durchblicksöffnung 230 verhindert, jedoch kann ein Bediener trotzdem noch durch die Durchblicksöffnung 230 hindurchsehen.

### Bezugszeichenliste

- 100: Absaugvorrichtung
- 110: Hauptkörper
- 112: Absaugtunnel
- 114: Absaugtrichteraufnahme
- 116: Anschlussaufnahme
- 118: Klemmaufnahme
- 120: Absaugtrichter
- 121: Tunnelöffnung
- 122: Gitteraufnahme
- 124: Gitter
- 128: Klemmöffnung
- 130: Ableitöffnung
- 140: Koppelungsvorrichtung
- 150: Klemmmechanik
- 160: elektrischer Anschluss
- 162: Schaltergehäuse
- 164: Schalteraufnahme
- 166: Rahmenaufnahme
- 167: Nut
- 170: Kabelschacht
- 200: Lichtanordnung
- 210: Rahmen
- 212: Verbindungsvorrichtung
- 214: Durchbruch
- 216: unterer Bereich
- 218: seitlicher Schenkel
- 220: Lichtelement
- 230: Durchblicksöffnung
- 236: oberer Bereich
- 240: elektrische Schaltung
- 300: transparente Schutzplatte
- 400: Bearbeitungsbereich
- 410: Koppelungsaufnahme
- 501: Längsrichtung
- 503: Breitenrichtung
- 505: Höhenrichtung
- 610-610: Schnittansicht
- 620-620: Schnittansicht
- 630-630: Schnittansicht
- 640-640: Schnittansicht

## Patentansprüche

1. Absaugvorrichtung (100) zum Absaugen von Staubpartikeln umfassend
einen Hauptkörper (110) mit einem Absaugtunnel (112) aufweisend eine Ansaugöffnung und eine Ableitöffnung (130), wobei die im Betrieb vor der Ansaugöffnung auftretenden Staubpartikel aufnehmbar und durch den Absaugtunnel (112) aus der Ableitöffnung (130) ableitbar sind;
eine Koppelungsvorrichtung (140) zum Befestigen des Hauptkörpers (110) an einem Bearbeitungsbereich (400);
eine Lichtanordnung (200), zum Beleuchten des Bearbeitungsbereiches (400), wobei die Lichtanordnung (200) einen Rahmen (210) aufweist, entlang dessen zumindest ein Lichtelement (220) angeordnet ist, das sich im Wesentlichen über den gesamten Rahmen (210) erstreckt, wobei der Rahmen (210) mittig eine Durchblicksöffnung (230) umschließt, wobei das Lichtelement (220) im Betrieb auf den Bearbeitungsbereich (400) gerichtet ist, wobei die Lichtanordnung oben an dem Hauptkörper (110) mittels einer Klemmmechanik (150) befestigt ist; und
eine elektrische Schaltung (240) zum Aktivieren und Deaktivieren der Lichtanordnung (200);
wobei der Rahmen (210) oben einen Durchbruch (214) aufweist, so dass der Rahmen (210) im Wesentlichen U-förmig oder hufeisenförmig ausgebildet ist.

2. Absaugvorrichtung (100) nach Anspruch 1, wobei sich das Lichtelement (220) über einen unteren Bereich (216) des Rahmens (210) erstreckt.

3. Absaugvorrichtung (100) nach einem der vorhergehenden Ansprüche, ferner umfassend eine transparente Schutzplatte (300), die vor der Durchblicksöffnung (230) und insbesondere lösbar an der Absaugvorrichtung (100) befestigt ist.

4. Absaugvorrichtung (100) nach Anspruch 3, bei der der Rahmen (210) an der transparenten Schutzplatte (300) befestigt ist.

5. Absaugvorrichtung (100) nach einem der Ansprüche 3 oder 4, bei der der Rahmen (210) mittels der transparenten Schutzplatte (300) an dem Hauptkörper (110) befestigt ist, insbesondere über die Klemmmechanik (150).

6. Absaugvorrichtung (100) nach einem der vorhergehenden Ansprüche, bei der die entlang des Rahmens (210) angeordneten Teile des Lichtelementes (220) zueinander geneigt sind.

7. Absaugvorrichtung (100) nach einem der vorhergehenden Ansprüche, bei der die Ableitöffnung (130) als Koppelungsvorrichtung (140) ausgebildet ist.

8. Absaugvorrichtung (100) nach einem der vorhergehenden Ansprüche, ferner umfassend einen elektrischen Anschluss (160) zum elektrischen Verbinden der Absaugvorrichtung (100) mit dem Bearbeitungsbereich (400).

9. Absaugvorrichtung (100) nach Anspruch 8, bei der eine elektrische Leitung von dem elektrischen Anschluss (160) zu dem Lichtelement (220) durch den Absaugtunnel (112) verläuft.

10. Absaugvorrichtung (100) nach einem der vorhergehenden Ansprüche, bei der die Ansaugöffnung als Absaugtrichter (120) ausgeformt ist.

11. Absaugvorrichtung (100) nach einem der vorhergehenden Ansprüche, bei der der Hauptkörper (110) um im Wesentlichen 180° nach vorne gekrümmt ist.

12. Absaugvorrichtung (100) nach einem der vorhergehenden Ansprüche, bei der die Ansaugöffnung mit einem Gitter (124) abgedeckt ist.

13. Bearbeitungsbereich (400) umfassend eine Absaugvorrichtung (100) nach einem der vorhergehenden Ansprüche und einen Arbeitstisch, der mit der Absaugvorrichtung (100) koppelbar ist.

## Claims

1. Suction device (100) for sucking dust particles, comprising a main body (110) with a suction tunnel (112) having a suction opening and a discharge opening (130), wherein the dust particles present in front of the suction opening during operation can be collected and discharged through the suction tunnel (112) from the discharge opening (130);
a coupling device (140) for fixing the main body (110) to a work area (400);
a light assembly (200) for illuminating the work area (400), wherein the light assembly (200) comprises a frame (210) along which at least one light element (220) is arranged, which extends substantially over the entire frame (210), wherein the frame (210) enclosing a viewing aperture (230) centrally, the light element (220) being directed towards the working area (400) during operation, the light assembly being attached to the top of the main body (110) by means of a clamping mechanism (150); and
an electrical circuit (240) for activating and deactivating the light assembly (200);
**characterised in that**
the frame (210) has an opening (214) at the top, so that the frame (210) is essentially U-shaped or horseshoe shaped.

2. Suction device (100) according to claim 1, wherein the light element (220) extends over a lower region (216) of the frame (210).

3. Suction device (100) according to one of the preceding claims, further comprising a transparent protective plate (300) which is attached in front of the viewing opening (230) and, in particular, detachably to the suction device (100).

4. Suction device (100) according to claim 3, wherein the frame (210) is attached to the transparent protective plate (300).

5. Suction device (100) according to one of claims 3 or 4, wherein the frame (210) is attached to the main body (110) by means of the transparent protective plate (300), in particular via the clamping mechanism (150).

6. Suction device (100) according to one of the preceding claims, wherein the parts of the light element (220) arranged along the frame (210) are inclined towards each other.

7. Suction device (100) according to one of the preceding claims, wherein the discharge opening (130) is designed as a coupling device (140).

8. Suction device (100) according to one of the preceding claims, further comprising an electrical connection (160) for electrically connecting the suction device (100) to the processing area (400).

9. Suction device (100) according to claim 8, wherein an electrical line runs from the electrical connection (160) to the light element (220) through the suction tunnel (112).

10. Suction device (100) according to one of the preceding claims, wherein the suction opening is formed as a suction funnel (120).

11. Suction device (100) according to one of the preceding claims, wherein the main body (110) is curved forward by substantially 180°.

12. Suction device (100) according to one of the preceding claims, wherein the suction opening is covered with a grille (124).

13. A processing area (400) comprising a suction device (100) according to one of the preceding claims and a worktable that can be coupled to the suction device (100).

## Revendications

1. Dispositif d'aspiration (100) pour l'aspiration de particules de poussière comprenant
un corps principal (110) avec un tunnel d'aspiration (112) présentant une ouverture d'aspiration et une ouverture d'évacuation (130), les particules de poussière se produisant pendant le fonctionnement devant l'ouverture d'aspiration pouvant être recueillies et évacuées par le tunnel d'aspiration (112) hors de l'ouverture d'évacuation (130) ;
un dispositif d'accouplement (140) pour fixer le corps principal (110) à une zone d'usinage (400) ;
un ensemble d'éclairage (200) pour éclairer la zone d'usinage (400), l'ensemble d'éclairage (200) comprenant un cadre (210) le long duquel est disposé au moins un élément d'éclairage (220) qui s'étend sensiblement sur tout le cadre (210), le cadre (210) entourant centralement une ouverture de vision (230), l'élément d'éclairage (220) étant dirigé, en fonctionnement, vers la zone d'usinage (400), l'ensemble d'éclairage étant fixé en haut du corps principal (110) au moyen d'un mécanisme de serrage (150) ; et
un circuit électrique (240) pour activer et désactiver l'ensemble d'éclairage (200) ;
dans lequel le cadre (210) présente en haut un passage (214), de sorte que le cadre (210) est réalisé essentiellement en forme de U ou en forme de fer à cheval.

2. Dispositif d'aspiration (100) selon la revendication 1, dans lequel l'élément d'éclairage (220) s'étend sur une zone inférieure (216) du cadre (210).

3. Dispositif d'aspiration (100) selon l'une quelconque des revendications précédentes, comprenant en outre une plaque de protection transparente (300) fixée au dispositif d'aspiration (100) en amont de l'ouverture de vision (230) et notamment de manière amovible.

4. Dispositif d'aspiration (100) selon la revendication 3, dans lequel le cadre (210) est fixé à la plaque de protection transparente (300).

5. Dispositif d'aspiration (100) selon l'une des revendications 3 ou 4, dans lequel le cadre (210) est fixé au corps principal (110) au moyen de la plaque de protection transparente (300), notamment par l'intermédiaire du mécanisme de serrage (150).

6. Dispositif d'aspiration (100) selon l'une des revendications précédentes, dans lequel les parties de l'élément d'éclairage (220) disposées le long du cadre (210) sont inclinées l'une par rapport à l'autre.

7. Dispositif d'aspiration (100) selon l'une des revendications précédentes, dans lequel l'ouverture d'évacuation (130) est réalisée sous la forme d'un dispositif d'accouplement (140).

8. Dispositif d'aspiration (100) selon l'une quelconque des revendications précédentes, comprenant en outre une connexion électrique (160) pour connecter électriquement le dispositif d'aspiration (100) à la zone d'usinage (400).

9. Dispositif d'aspiration (100) selon la revendication 8, dans lequel une ligne électrique s'étend depuis la connexion électrique (160) jusqu'à l'élément d'éclairage (220) à travers le tunnel d'aspiration (112).

10. Dispositif d'aspiration (100) selon l'une quelconque des revendications précédentes, dans lequel l'ouverture d'aspiration est formée comme une trémie d'aspiration (120).

11. Dispositif d'aspiration (100) selon l'une quelconque des revendications précédentes, dans lequel le corps principal (110) est incurvé sensiblement à 180 ° vers l'avant.

12. Dispositif d'aspiration (100) selon l'une des revendications précédentes, dans lequel l'ouverture d'aspiration est recouverte d'une grille (124).

13. Zone d'usinage (400) comprenant un dispositif d'aspiration (100) selon l'une quelconque des revendications précédentes et une table de travail qui peut être couplée au dispositif d'aspiration (100).
